# EUROPÄISCHE PATENTSCHRIFT

(11) **EP 1 319 546 B1**
(45) Veröffentlichungstag und Bekanntmachung des Hinweises auf die Patenterteilung: **29.09.2004**
(21) Anmeldenummer: 01129657.1
(22) Anmeldetag: 12.12.2001
(51) Int. Cl.: B60K 41/00, F16H 61/04, F16H 3/12, B60K 6/04

(54) **Antriebsvorrichtung für ein Kraftfahrzeug mit einer Verbrennungsmaschine, einem Starter-Generator und einem Hand-Schaltgetriebe**
Drive train for vehicle with internal combustion engine, starter-generator and manual shift transmission
Groupe propulseur pour véhicule avec moteur thermique, démarreur-alternateur et boite de vitesses manuelle

(43) Veröffentlichungstag der Anmeldung: 18.06.2003
(73) Patentinhaber: SIEMENS AKTIENGESELLSCHAFT, 80333 München (DE)
(72) Erfinder: Riem, Alexander, 97070 Würzburg (DE); Schäfer, Heinz, Dr., 97230 Estenfeld (DE)

(56) Entgegenhaltungen:
- EP-A- 0 845 618
- WO-A-00/03163
- WO-A-01/07278
- WO-A-89/04081
- DE-A- 19 901 414
- US-A- 6 054 776
- US-A- 6 159 127

## Beschreibung

Antriebssystem für ein Kraftfahrzeug mit einer Verbrennungsmaschine, einem Starter-Generator und einem Hand-Schaltgetriebe

Die Erfindung bezieht sich auf ein Antriebssystem für ein Kraftfahrzeug mit einer Verbrennungsmaschine, einem Starter-Generator und einem Hand-Schaltgetriebe mit einer antriebsseitigen Verbrennungsmaschine und einem antriebsseitigen Starter-Generator sowie einem abtriebsseitigen Hand-Schaltgetriebe gemäß Patentanspruch 1.

Bei üblichen Fahrzeugen mit händisch bzw. automatisch bedientem Schaltgetriebe ist beim Gangwechseln durch Betätigung einer Trenn-Kupplung der Antriebsstrang zwischen der Verbrennungsmaschine und dem Schaltgetriebe momentenfrei zu schalten; vor dem Durchschalten auf den neuen nächsten Gang ist mit Hilfe einer mechanischen Synchronisiereinrichtung eine Drehzahlanpassung der Losräder im Schaltgetriebe einerseits sowie der Getriebeeingangswelle und der Kupplungsscheibe andererseits vorzusehen. Erst nach dieser Synchronisierung kann auf den neuen Gang durchgeschaltet werden. Durch anschließendes Einkuppeln der zuvor betätigten Trenn-Kupplung kann dann wieder ein Drehmoment aufgebaut werden. Die bei den Anfahr- bzw. Schaltvorgängen anfallende Verlustenergie in der üblicherweise als Reibungskupplung auszubildenden Trennkupplung geht für den Antrieb verloren.

Gemäß Aufgabe vorliegender Erfindung soll ausgehend von einem Antriebssystem mit einer antriebsseitigen Verbrennungsmaschine und einem abtriebsseitigen, von Hand direkt oder über Aktuatoren zu betätigenden, Hand-Schaltgetriebe ohne Minderung des Fahr- und Bedienkomforts auf die an sich bei einem derartigen Antrieb notwendige Reibungs-Trennkupplung verzichtet und die dabei ansonsten anfallende Verlustenergie vermieden werden.

Die Lösung der vorgenannten Aufgabe gelingt erfindungsgemäß durch eine Antriebssystem gemäß Patentanspruch 1; vorteilhafte Ausgestaltungen des Antriebssystems sind Gegenstand der Unteransprüche.

Ein Antriebssystem mit den Merkmalen des Oberbegriffes des Patentanspruchs 1 ist durch die WO 01/07228 A bekannt.

Durch die EP 0 845 616 A2 ist eine Getriebeanordnung mit einer ersten Getriebewelle und einer zweiten Getriebewelle sowie einem Zusatzantrieb in Form eines Elektromotors oder eines Hydromotors bekannt, durch dessen Erhöhung seines Momentes in einem motorischen Betrieb ein Moment an der zweiten Getriebewelle antriebsseitig zu Null wird und eine antriebsseitige Verbindung der zweiten Getriebewelle freilaufbedingt öffnet.

Durch das erfindungsgemäße Zusammenwirken der Verbrennungsmaschine mit einem Starter-Generator über ein Planetengetriebe mit einer Überbrückungs-Vorrichtung im Antriebsstrang zwischen der Verbrennungsmaschine und dem Hand-Schaltgetriebe kann auf die stark verlustbehaftete und zu störend empfundenen langen Ein- und Auskuppelzeiten neigende Reibungskupplung verzichtet und durch den schnellen Momentenaufbau bzw. Momentenabbau mit Hilfe des Starter-Generators und der Verbrennungsmaschine eine für die mechanische Synchronisierung in dem Hand-Schaltgetriebe nahezu belastungsneutrale Synchronisierung mit schneller Schaltmöglichkeit erreicht werden, wobei bei Drehzahlgleichheit von Antriebswelle, Rotorwelle und Getriebe-Eingangswelle in vorteilhafter Weise das Planetengetriebe durch die Überbrückungs-Vorrichtung verlustfrei im Sinne einer starren Übertragungseinheit blockierbar ist.

Die Erfindung sowie weitere vorteilhafte Ausgestaltungen gemäß den ausgestaltenden Unteransprüchen bzw. gemäß den möglichen unterschiedlichen Antriebsvorgängen werden im folgenden anhand schematischer Ausführungsbeispiele in der Zeichnung näher erläutert; darin zeigen:
- FIG 1: das Blockschaltbild einer Antriebsvorrichtung mit einem händisch zu betätigenden Hand-Schaltgetriebe;
- FIG 2: das Blockschaltbild einer Antriebsvorrichtung mit einem automatisierten durch Aktuatoren zu betätigenden Hand-Schaltgetriebe.

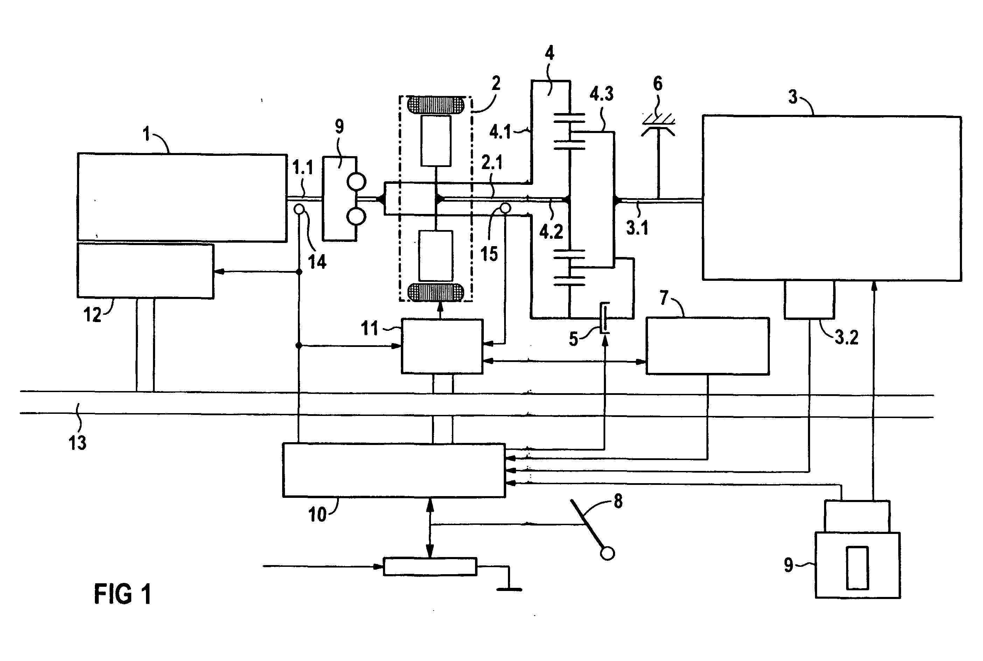

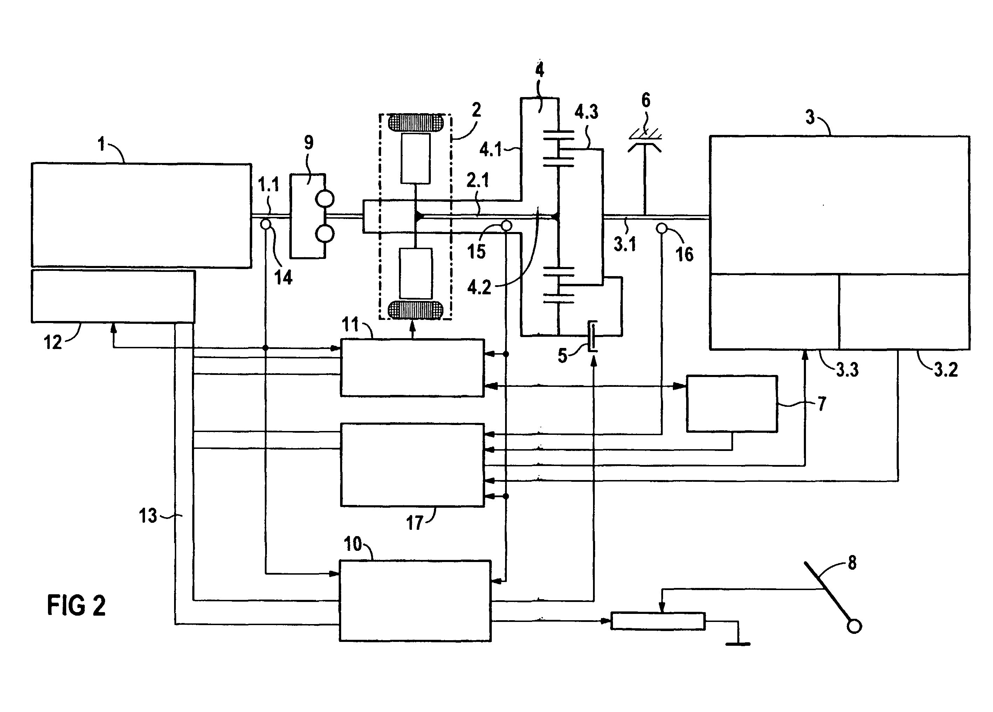

Die FIG 1 und 2 zeigen jeweils ein Antriebssystem mit einem antriebsseitigen Verbrennungsmotor 1 und einem antriebsseitigen Starter-Generator 2, die über ein einstufiges Planetengetriebe 4 mit einer digitalen Überbrückungs-Vorrichtung 5 und einen Freilauf 6 an die Getriebe-Eingangswelle 3.1 eines Hand-Schaltgetriebes 3 ankoppelbar sind. Das Hand-Schaltgetriebe 3 ist von einem Schalthebel 9 unmittelbar (FIG 1) oder über Aktuatoren 3.3 im Fall eines automatisierten Hand-Schaltgetriebes (FIG 2) bedienbar. In Abhängigkeit von der Stellung eines Fahrpedals 8 sind über einen Drehmoment-Manager 10 und einen CAN-Bus 13 einer Steuervorrichtung 11 für den Starter-Generator 2 sowie einer Steuervorrichtung 12 für die Verbrennungsmaschine 1 Drehmomentensollwerte vorgebbar. Von einem Drehzahlgeber 14 ist die Drehzahl der Abtriebswelle 1.1 der Verbrennungsmaschine 1 und von einem Drehzahlgeber 15 die Drehzahl der Rotorwelle 2.1 des Starter-Generators 2 jeweils sowohl dem Drehmoment-Manager 10 als auch dem Steuergerät 11 für den Starter-Generator 2 und dem Steuergerät 12 für die Verbrennungsmaschine vorgebbar. In die Steuerung des Drehmomenten-Managers 10 und des Starter-Generators 2 ist ein Energiespeicher, insbesondere eine Fahrzeugbatterie 7, eingebunden, der bei generatorischem Betrieb des Starter-Generators 2 von diesem aufladbar ist und bei motorischen Betrieb des Starter-Generators 2 diesen speisen kann.

Im Fall des automatisierten Hand-Schaltgetriebes gemäß FIG 2 ist eine weitere Steuervorrichtung 17 für die Aktuatoren 3.3 des Hand-Schaltgetriebes vorgesehen; ein weiterer Drehzahlgeber 16 dient zur Drehzahlerfassung der Getriebe-Eingangswelle 3.1 des Hand-Schaltgetriebes 3 für die den Aktuatoren 3.3 zugeordnete Steuervorrichtung 17.

Das einstufige Planetengetriebe 4 besteht im wesentlichen aus einem in Drehmitnahme mit der Antriebswelle 1.1 der Verbrennungsmaschine 1 stehenden Hohlrad 4.1, einem in Drehmitnahme mit der Rotorwelle 2.1 des Starter-Generators 2 stehenden Sonnenrad 4.2 sowie einem in Drehmitnahme mit der Getriebe-Eingangswelle 3.1 des Hand-Schaltgetriebes 3 stehenden Planetenradträger 4.3; durch eine digitale, verschleiß- und verlustfrei arbeitende Überbrückungs-Vorrichtung 5 sind die vorgenannten beweglichen Bauteile einschließlich der Planetenräder in der Übertragung zwischen dem Hohlrad 4.1 und dem Sonnenrad 4.2 im Sinne einer starren Übertragungseinheit gegeneinander blockier- und kuppelbar. Durch einen ebenfalls reibschluss- bzw. verschleißfrei arbeitenden Freilauf 6 ist eine Drehblockierung des Antriebsstranges zwischen dem Planetenradträger 4.3 und der Getriebe-Eingangswelle 3.1 im Sinne einer Drehung der Antriebswelle 1.1 der Verbrennungsmaschine 1 entgegen ihrer betriebsmäßigen Drehrichtung beim Anlassvorgang und bei freier Drehmöglichkeit in ihrer betriebsmäßigen Drehrichtung vorgesehen.

Beim Anlassen der Verbrennungsmaschine 1 gibt der Starter-Generator 2 in zu der betriebsmäßigen Drehrichtung der Abtriebswelle 1.1 der Verbrennungsmaschine 1 entgegengesetzter Drehrichtung ein Moment an das Sonnenrad 4.2 des Planetengetriebes 4 ab. Die Drehrichtung der Rotorwelle 2.1 des Starter-Generators 2 ist hierbei als "negativ", die Drehrichtung der Antriebswelle 1.1 der Verbrennungsmaschine 1 als "positiv" definiert. Durch den Freilauf 6 ist der Planetenradträger 4.3 des Planetengetriebes 4 drehblockiert und verhindert derart eine Kraftübertragung auf die Getriebe-Eingangswelle 3.1 des Schaltgetriebes 3. Die Verbrennungsmaschine 1 wird dadurch über das Planetengetriebe 4 und die mit dem Hohlrad 4.1 gekuppelte Abtriebswelle 1.1 in betriebsmäßiger (positiver) Drehrichtung angetrieben. Die Verbrennungsmaschine 1 kann gestartet werden, wobei das von dem Starter-Generator 2 abgeforderte Drehmoment aufgrund der gegebenen Übersetzung des Planetengetriebes 4 im Vergleich zu einem direktstartenden Starter-Generator vorteilhaft klein gehalten werden kann.

Nachdem zum Losfahren des Kraftfahrzeuges ein Gang von Hand oder automatisch mit entsprechender Vorgabe durch den Aktuator 3.3 eingelegt worden ist, kann mit Hilfe des Fahrpedals 8 über den Drehmomenten-Manager 10 die Höhe des Generatormomentes für den als Generator arbeitenden Starter-Generators 2 als Abstützmoment im Planetengetriebe 4 bestimmt werden, wodurch dann ein positives Drehmoment von der Verbrennungsmaschine 1 über das Planetengetriebe 4 auf die Getriebe-Eingangswelle 3.1 des Hand-Schaltgetriebes 3 übertragbar ist. Der Starter-Generator 2 weist zunächst noch eine "negative" Drehzahl auf. Überschreitet das Drehmoment an der Getriebe-Eingangswelle 3.1 das Losbrechmoment des Fahrzeugs, so setzt sich dieses in Bewegung. Entscheidend für das Losfahren des Kraftfahrzeuges ist das generatorische Abstützmoment des Starter-Generators auf die Welle für das Sonnenrad; je größer dieses Moment ist, desto höher ist das Reaktionsmoment des Planetenradträgers und damit das auf die Getriebe-Eingangswelle wirkende Antriebsmoment.

Nach Erreichen einer bestimmten Drehzahl der Getriebe-Eingangswelle 3.1 wechselt die Rotorwelle 2.1 des Starter-Generators ihre Drehrichtung und geht unter Beibehaltung der Momentenrichtung in einen Motorbetrieb über. Sobald die Drehzahl des Hohlrades 4.1 und des Planetenradträgers 4.3 gleich sind, wird die Überbrückungs-Vorrichtung 5 geschlossen und somit der Antriebsstrang zwischen der Verbrennungsmaschine 1 bzw. dem Starter-Generator 2 einerseits und dem abtriebsseitigen Hand-Schaltgetriebe 3 bei im Sinne einer starren Übertragungseinheit blockiertem Planetengetriebe geschlossen. Der Starter-Generator 2 kann dann je nach Anforderung entweder im Generatorbetrieb oder im Motorbetrieb arbeiten, da er die gleiche Drehzahl wie die Verbrennungsmaschine 1 besitzt.

Zur Einleitung eines Hochschaltvorgangs berührt der Fahrer den Schalthebel 9. Die Schaltabsicht wird durch die Gangerkennung 3.2 erkannt und dem Drehmomenten-Manager 10 gemeldet. Vom Drehmomenten-Manager wird über den CAN-Bus 13 über die Steuervorrichtung 11 für den Starter-Generator 2 und die Steuervorrichtung 12 für die Verbrennungsmaschine 1 eine Drehmomentenvorgabe Null abgegeben und die Überbrückungs-Vorrichtung 5 geöffnet. Über die Steuervorrichtung 11 für den Starter-Generator 2 und die Steuervorrichtung 12 für die Verbrennungsmaschine 1 wird das jeweilige Moment mit schnellstmöglicher Rampe auf Null geregelt. Dabei wird das Moment an der Getriebe-Eingangswelle 3.1 dann zu Null, wenn eines der beiden Momente, d.h. das Moment des Starter-Generators 2 bzw. der Verbrennungsmaschine 1, zu Null geworden ist. Auf Grund der kleineren Zeitkonstante wird in der Regel das Drehmoment des Starter-Generators 2 zuerst zu Null.

Durch die vorteilhafte hochdynamische Drehmomentensteuerung des Starter-Generators 2 und der Verbrennungsmaschine 1 durch den Drehmomenten-Manager 10 kann das durch diese Maschinen gegebene zusätzlich Trägheitsmoment im gleichen kurzen Zeitraum abgebremst werden, in dem die mechanische Synchronisierung der Losräder des Hand-Schaltgetriebes abbremsbar sind. In vorteilhafter Weise wird das unterschiedliche Drehmomentenverhalten von Starter-Generator einerseits und Verbrennungsmaschine andererseits bei der Steuerung der Drehzahl dieser Maschinen ausgenutzt. Bei hohen Drehzahlen weist die Verbrennungsmaschine 1 ein relativ großes Reibungsmoment und eine hohe Drehmomentendynamik auf, während bei kleinen Drehzahlen das Reibmoment und die Drehmomentendynamik relativ klein sind. In entgegengesetzter Weise ist bei hohen Drehzahlen das Bremsmoment des Starter-Generators - aus Gründen der vorgesehenen Leistungsbegrenzung - relativ klein bei gleichzeitiger hoher Drehmomentendynamik. Bei niedrigen Drehzahlen weist der Starter-Generator 2 jedoch ein hohes Bremsmoment und eine hohe Drehmomentendynamik auf. Dieses unterschiedliche Betriebsverhalten der Verbrennungsmaschine einerseits bzw. des Starter-Generators andererseits wird erfindungsgemäß für die Schaltvorgänge ohne verschleiß- und verlustbehaftete Kupplung im Antriebsstrang zwischen der Verbrennungsmaschine bzw. dem Starter-Generator einerseits und dem Hand-Schaltgetriebe andererseits im Sinne einer schnellen Drehmomenten-Regelung bzw. Synchronisierung optimal ausgenutzt.

Bei Erreichen des Drehmomentes Null kann der Fahrer die vorherige Gangposition in die Neutralgasse bewegen und die Umschaltung auf den nächst höheren Gang vorbereiten. Die Umschaltabsicht auf den nächst höheren Gang wird durch die Gangerkennung 3.2 erkannt und wiederum an den Drehmomenten-Manager 10 gemeldet. Dieser berechnet daraufhin die notwendige Drehzahl der Getriebe-Eingangswelle 3.1 für den neuen höheren Gang. Nunmehr ist ein Synchronisierungsvorgang derart zu erreichen, dass die Drehzahl der Getriebe-Eingangswelle auf die für den neuen Gang berechnete Drehzahl zu erniedrigen ist. Dazu sendet der Drehmomenten-Manager 10 über den CAN-Bus 13 ein negatives Moment - das heißt ein Bremsmoment bzw. ein generatorisches Moment - an das Steuergerät 12 für die Verbrennungsmaschine 1 bzw. die Steuervorrichtung 11 für den Starter-Generator 2. Sobald die Getriebe-Eingangswelle 3.1 die berechnete Synchronisierungsdrehzahl für den neuen Gang erreicht hat, kann dieser eingelegt werden. Anschließend kann das antreibende Drehmoment sehr schnell mit Hilfe des Starter-Generators 2 bzw. der Verbrennungsmaschine 1 aufgebaut werden, da kein Reibschluss-Einkuppelvorgang erforderlich ist.

Nachdem die Drehzahl des Starter-Generators 2 an die Drehzahl der Verbrennungsmaschine 1 angepasst ist und somit sämtliche Drehzahlen des Planetengetriebes 4 gleich sind, wird die Überbrückungs-Vorrichtung 5 im Sinne einer Blockierung der beweglichen Teile des Planetengetriebes 4 und damit starren Übertragungseinheit geschaltet.

Bei einem Abwährtsschaltvorgang sendet der Drehmomenten-Manager 10 über den CAN-Bus 13, die Steuervorrichtung 12 für die Verbrennungsmaschine 1 sowie die Steuervorrichtung 11 für den Starter-Generator 2 ähnlich wie beim zuvor erläuterten Hochschaltvorgang eine Drehmomentenvorgabe Null und öffnet die Überbrückungs-Vorrichtung 5. Sowohl die Verbrennungsmaschine 1 als auch der Starter-Generator 2 werden mit schnellstmöglicher Rampe auf ein Null-Drehmoment heruntergesteuert. Aufgrund der kleineren Zeitkonstante des Starter-Generators 2 wird in der Regel das Moment Null an der Getriebe-Eingangswelle 3.1 dann erreicht sein, wenn der Starter-Generator 2 auf diesen Wert heruntergesteuert ist.

Anschließend wird der vorherige Gang herausgenommen und die Drehzahl der Getriebe-Eingangswelle 3.1 für den neuen Gang berechnet. Daraufhin steuert der Drehmomenten-Manager 10 die Getriebe-Eingangswelle auf die neu berechnete Drehzahl hoch; dazu sendet er über den CAN-Bus 13 ein positives Moment, d.h. ein Antriebsmoment hinsichtlich der Verbrennungsmaschine bzw. ein motorisches Moment hinsichtlich des Starter-Generators-an die Steuervorrichtung 11 für den Starter-Generator 2 bzw. die Steuervorrichtung 12 für die Verbrennungsmaschine 1. Während dieses Vorgangs wird der Energiespeicher, insbesondere die Fahrzeug-Batterie 7, zur Speisung des Starter-Generators 2 Energie entnommen.

Anschließend ist ein Synchronisierungsvorgang einzuleiten, wobei das Trägheitsmoment von Verbrennungsmaschine und Starter-Generator durch deren entsprechende Steuerung im gleichen Zeitraum hochbeschleunigbar sind, indem mittels der mechanischen Synchronisierung die durch die Losräder und die Getriebe-Eingangswelle gegebenen Trägheitsmomente hochbeschleunigt werden. Nach Abschluss dieses Synchronisiervorganges kann dann der niedere Gang mittels Handbetätigung oder durch Betätigung der Aktuatoren 3.3 bei einem automatisierten Hand-Schaltgetriebe 3 eingelegt werden. Anschließend kann das Drehmoment mit Hilfe des Starter-Generators 2 und der Verbrennungsmaschine 1 sehr schnell aufgebaut werden, da ein gesonderter reibschlüssiger Einkuppelvorgang wiederum entfällt. Sobald die Drehzahlen des Starter-Generators 2 und der Verbrennungsmaschine 1 übereinstimmen, wird die Überbrückungs-Vorrichtung 5 wiederum im Sinne einer starren Übertragungseinheit geschlossen.

Beim Anfahren des Kraftfahrzeuges muss für das Sonnenrad 4.1 des Planetengetriebes 4 durch generatorischen Betrieb des Starter-Generators 2 abgebremst werden, damit an der Getriebe-Eingangswelle 3.1 des Schaltgetriebes 3 ein Drehmoment erzeugt werden kann; in gleicher Weise ist eine generatorische Abbremsung durch den Starter-Generator 2 notwendig, wenn bei einem Hochschaltvorgang das Trägheitsmoment von Starter-Generator 2 und Verbrennungsmaschine 1 beim Synchronisiervorgang abgebremst werden müssen. Ein generatorischer Betrieb des Starter-Generators ist - wie zuvor beschrieben - weiterhin notwendig, um ein Abstützmoment in dem Planetengetriebe 4 gegenüber der Verbrennungsmaschine 1 zu gewährleisten. Falls in diesem Fall der zur Speisung des Starter-Generators 2 in dessen Motorbetrieb vorgesehene und zur Aufnahme elektrischer Leistung bei dessen Generatorbetrieb vorgesehene Energiespeicher, insbesondere die Fahrzeugbatterie 7, vollgeladen ist, wird nach einer Ausgestaltung der Erfindung der Starter-Generator 2 selbst - insbesondere durch entsprechende feldorientierte Ansteuerung - stark verlustbehaftet betrieben. Da jedoch erfindungsgemäß sowohl der Anfahrvorgang und insbesondere der Synchronisiervorgang nur eine sehr kurze Zeit beanspruchen, kann auch bei voll aufgeladenem Eenergiespeicher ein Anfahr- bzw. Synchronisiervorgang mit verlustbehafteten betriebenen Starter-Generator erfolgen.

Das erfindungsgemäße Lösungsprinzip lässt sich - ohne eine daraus ableitbare Einschränkung - in Kurzfassung wie folgt zusammenfassen:

Auf eine verschleiß- und verlustbehaftete Reibungskupplung im Antriebsstrang eines Fahrzeuges, insbesondere eines Hybridfahrzeuges, kann verzichtet werden, wenn antriebsseitig die Antriebswelle 1.1 einer Verbrennungsmaschine 1 und die Rotorwelle 2.1 eines Starter-Generators 2 über ein einstufiges Planetengetriebe 4 mit der Getriebe-Eingangswelle 3.1 eines abtriebsseitigen Hand-Schaltgetriebes 3 kuppelbar sind und beim Schalten zur Nulldrehmoment-Steuerung bzw. zur Synchronisierung eine entsprechende Drehmomenten-Steuerung sowohl der Verbrennungsmaschine 1 als auch des Starter-Generators 2 vorgesehen ist.

## Patentansprüche

1. Antriebssystem für ein Kraftfahrzeug,
- mit einer antriebsseitigen Verbrennungsmaschine (1) mit einer Antriebswelle (1.1),
- mit einem antriebsseitigen Starter-Generator (2), insbesondere in Form einer Asynchronmaschine, mit einer mit der Antriebswelle (1.1) reibschlussfrei gekoppelten Rotorwelle (2.1);
- mit einem abtriebsseitigen Hand-Schaltgetriebe (3) mit einer mit der Antriebswelle (1.1) und/oder der Rotorwelle (2.1) gekoppelten Getriebe-Eingangswelle (3.1);
- mit einem einstufigen Planetengetriebe (4) im reibschlussfreien Antriebsstrang zwischen der Verbrennungsmaschine (1) bzw. dem Starter-Generator (2) einerseits und dem Hand-Schaltgetriebe (3) andererseits, wobei die Antriebswelle (1.1) in Drehmitnahme mit dem Hohlrad (4.1), die Rotorwelle (2.1) in Drehmitnahme mit dem Sonnenrad (4.2) und die Getriebe-Eingangswelle (3.1) in Drehmitnahme mit dem Planetenradträger (4.3) jeweils des Planetengetriebes (4) stellbar ist;
- mit einer digital schaltbaren Überbrückungs-Vorrichtung (5), über welche bei Drehzahlgleichheit von Antriebswelle (1.1), Rotorwelle (2.1) und Getriebe-Eingangswelle (3.1) die Übertragungsteile des Planetengetriebes (4) im Sinne einer starren Übertragungseinheit gegenseitig kuppelbar und im Schaltbetrieb des Hand-Schaltgetriebes (3) bzw. im Start-/Anfahrbetrieb des Fahrzeuges wieder entkuppelbar sind,
**gekennzeichnet durch**
- einen Drehmomenten-Manager (10) zur gleichzeitigen Steuerung sowohl der Verbrennungsmaschine (1) als auch des Starter-Generators (2) im Sinne eines antriebsseitigen Null-Drehmomentes bzw. einer Drehzahl-Synchronisierung gegenüber der Getriebe-Eingangswelle (3.1) und dem Hand-Schaltgetriebe (3) bei jeweils geöffneter Überbrückungs-Kupplung (5) **durch** eine Momenten- bzw. Drehzahlsteuerung vorwiegend unter Verwendung der Verbrennungsmaschine (1) bei hohen Drehzahlen und vorwiegend unter Verwendung des Starter-Generators (2) bei niedrigen Drehzahlen.

2. Antriebssystem nach Anspruch 1
- mit einem Freilauf (6) im Antriebsstrang zwischen dem Planetenradträger (4.3) und der Getriebe-Eingangswelle (3.1);
- mit einer Drehblockierung des Planetenradträgers (4) während des Anlassvorgangs der Verbrennungsmaschine (1) entgegen ihrer betriebsmäßigen Drehrichtung bei freier Drehmöglichkeit in ihrer betriebsmäßigen Drehrichtung.

3. Antriebssystem nach Anspruch 1 und/oder 2
- mit einem Torsions-Schwingungsdämpfer (9) im Antriebsstrang zwischen der Antriebswelle (1.1) der Verbrennungsmaschine (1) und dem Hohlrad (4.1).

4. Antriebssystem nach einem der Ansprüche 1-3 mit folgenden Betätigungen für den Anlassvorgang der Verbrennungsmaschine:
- Öffnen der Überbrückungs-Vorrichtung (5);
- Dreh-Blockierung des Planetenradträgers (4.3) mittels des Freilaufs (6);
- Motor-Betrieb des Starter-Generators (2) mit entgegen der betriebsmäßigen Drehrichtung der Antriebswelle (1.1) der Verbrennungsmaschine (1) rotierender Rotorwelle (2.1) des Starter-Generators (2) und mit über die Übersetzung des Planetengetriebes (4) angetriebener Antriebswelle (1.1) der Verbrennungsmaschine.

5. Antriebssystem nach einem der Ansprüche 1-3 mit folgenden Betätigungen für den Anfahrvorgang des Kraftfahrzeuges:
- Öffnen der Überbrückungs-Vorrichtung (5);
- Einlegen eines Ganges in dem Hand-Schaltgetriebe (3),
- Generator-Betrieb des Starter-Generators (5) mit entgegen der betriebsmäßigen Drehrichtung der Antriebswelle (1.1) rotierender Rotorwelle (2.1) und mit einer Steigerung des generatorischen Drehmomentes des Starter-Generators (2), insbesondere mittels eines Fahrpedals (8), bis zum Motor-Betrieb mit in der betriebsmäßigen Drehrichtung der Antriebswelle (1.1) rotierender Rotorwelle (2.1);
- Schließen der Überbrückungs-Vorrichtung (5) bei Synchronität zwischen dem Hohlrad (4.1) und dem Planetenradträger (4.3).

6. Antriebssystem nach einem der Ansprüche 1-3 mit folgenden Betätigungen für den Hochschaltvorgang des Hand-Schaltgetriebes (3):
- Öffnen der Überbrückungs-Vorrichtung (5);
- Minderung des Drehmomentes des Starter-Generators (2) und der Verbrennungsmaschine (1) im Sinne eines Null-Drehmomentes an der Getriebe-Eingangswelle (3.1);
- Herausnahme des vorherigen niedrigeren Ganges;
- Mindern des Drehmomentes des Starter-Generators (2) und/oder der Verbrennungsmaschine (1) im Sinne einer mechanischen Synchronisierung an das Hand-Schaltgetriebe (3);
- Einlegen des höheren Ganges des Hand-Schaltgetriebes (3) nach Abschluss der mechanischen Synchronisierung;
- Vorgabe eines gewünschten Drehmomentes an die Verbrennungsmaschine (1) bzw. an den Starter-Generator (2);
- Schließen der Überbrückungs-Kupplung (5) bei Synchronität zwischen dem Hohlrad (4.1) und dem Planetenradträger (4.3).

7. Antriebssystem nach einem der Ansprüche 1-3 mit folgenden Betätigungen für den Abwärtsschaltvorgang des Schaltgetriebes:
- Öffnen der Überbrückungs-Vorrichtung (5);
- Minderung des Drehmomentes des Starter-Generators (2) und der Verbrennungsmaschine (1) im Sinne eines Null-Drehmomentes an der Getriebe-Eingangswelle (3.1);
- Herausnahme des vorherigen höheren Ganges;
- Erhöhen des Drehmomentes des Starter-Generators (2) und der Verbrennungsmaschine (1) im Sinne einer mechanischen Synchronisierung an das Hand-Schaltgetriebe (3);
- Einlegen des folgenden niederen Ganges des Hand-Schaltgetriebes (3) nach Abschluss der mechanischen Synchronisierung;
- Schließen der Überbrückungs-Vorrichtung (5), bei Synchronität zwischen dem Hohlrad (4.1) und dem Planetenradträger (4.3).

8. Antriebssystem mit einem Anfahrvorgang bzw. Hochschaltvorgang nach zumindest einem der Ansprüche 5-7
- mit einer Speisung der generatorischen Bremsleistung des Starter-Generators (2) in einen elektrischen Energiespeicher, insbesondere eine Fahrzeug-Batterie (7).

9. Antriebssystem mit einem Anfahrvorgang bzw. Hochschaltvorgang nach zumindest einem der Ansprüche 5-7
- mit einem Verbrauch der generatorischen Bremsleistung des Starter-Generators (2) durch verlustbehafteten Betrieb des Starter-Generators (2) selbst, insbesondere bei vollgeladenem Energiespeicher.

## Claims

1. Drive system for a vehicle,
- with a drive-side internal combustion engine (1) with a drive shaft (1.1),
- with a drive-side starter-generator (2), in particular in the form of an asynchronous machine, with a rotor shaft (2.1) coupled friction-free to the drive shaft (1.1)
- with a driven side manual gearbox (3) with a transmission input shaft (3.1) coupled with the drive shaft (1.1) and/or the rotor shaft (2.1)
- with a single-stage planetary gear (4) in the friction -free drive shaft between the internal combustion engine (1) or the starter-generator (2) on one side and the manual gearbox (3) on the other side, whereby the drive shaft (1.1) can be set to rotate with the ring gear (4.1), the rotor shaft (2.1) with the sun gear (4.2) and the transmission input shaft (3.1) with the planetary gear carrier (4.3) of the planetary gear carrier in each case;
- with a digitally switchable bridging device (5), via which when the speed of the drive shaft (1.1), rotor shaft (2.1) and transmission input shaft (3.1) are the same, the transmission parts of the planetary gear (4) in the sense of a rigid transmission unit can be coupled to each other and can be decoupled again when the manual gearbox (3) is shifting gear or when the vehicle is starting/moving off,
**characterized in that** a torque manager (10) for simultaneous control of both the internal combustion engine (1) and also the starter-generator (2) in the sense of a drive-side zero torque or a speed synchronization in relation to the transmission input shaft (3.1) and the manual gearbox (3) with the bridging coupling (5) opened in each case through a torque or speed control predominantly using the internal combustion engine (1) at high revs and predominantly using the starter-generator (2) at low revs.

2. Drive system according to Claim 1
- with an idler (5) in the drive train between the planetary gear carrier (4.3) and the transmission input shaft (3.1);
- with a rotation blocking of the planetary gear carrier (4) during the start-up process of the internal combustion engine (1) against its usual operating direction which the ability to turn freely in its usual operating direction.

3. Drive system according to Claim 1 and/or 2
- with a torsion vibration damper (9) in the drive train between the drive shaft (1.1) of the internal combustion engine (1) and the ring gear (4.1).

4. Drive system according to one of the Claims 1-3, with the following activations for the start-up process of the internal combustion engine:
- opening the bridging device (5);
- rotation blocking of the planetary gear carrier (4.3) by the idler (6);
- motor operation of the starter-generator (2) with a rotor shaft (2.1) of the starter-generator (2) rotating against the normal operating direction of the drive shaft (1.1) and with a drive shaft (1.1) of the internal combustion engine driven via the transmission of the planetary gear (4).

5. Drive system according to one of the Claims 1-3 with the following activations for the move-off process of the motor vehicle:
- opening the bridging device (5);
- engaging a gear in the manual gearbox (3),
- generator operation of the starter-generator (2) with a rotor shaft (2.1) of the starter-generator (2) rotating against the normal operating direction of the drive shaft (1.1) and with an increase of the generator torque of the starter-generator (2), in particular by means of an accelerator pedal (8), up to motor operation with a rotor shaft (2.1) rotating in the normal direction of operation of the drive shaft (1.1)
- closing the bridging device (5) on synchronization between the ring gear (4.1) and the planetary gear carrier (4.3).

6. Drive system according to one of the Claims 1-3 with the following activations for the shift-up process of the manual gearbox (3)
- opening the bridging device (5);
- reducing the torque of the starter-generator (2) and the internal combustion engine (1) in the sense of a zero torque at the transmission input shaft (3.1);
- disengaging the previous lower gear
- reducing the torque of the starter-generator (2) and/or the internal combustion engine (1) in the sense of a mechanical synchronization;
- specifying a desired speed and the internal combustion engine (1) or at the starter-generator (2);
- closing the bridging coupling (5) on synchronism between the ring gear (4.1) and the planetary gear carrier (4.3).

7. Drive system according to one of the Claims 1-3 with the following activations for the shift-down process of the manual gearbox (3)
- opening the bridging device (5);
- reducing the torque of the starter-generator (2) and/or the internal combustion engine (1) in the sense of a zero torque at the transmission input shaft (3.1);
- disengaging the previous higher gear;
- increasing the torque of the starter-generator (2) and the internal combustion engine (1) in the sense of a mechanical synchronization at the manual gearbox (3);
- engaging the following lower gear of the manual gearbox (3) after completion of the mechanical synchronization;
- closing the bridging device (5) on synchronism between the ring gear (4.1) and the planetary gear carrier (4.3).

8. Drive system with a move-off process or a shift-up process in accordance with at least one of Claims 5-7
- with feeding of the generational braking power of the starter-generator (2) into an electrical energy store, in particular a vehicle battery (7).

9. Drive system with a move-off process or a shift-up process in accordance with at least one of Claims 5-7
- with consumption of the generational braking power of the starter-generator (2) by loss-generating operation of the starter-generator (2) itself, in particular with a fully charged energy store.

## Revendications

1. Système d'entraînement pour véhicule à moteur, comprenant
- un moteur à combustion interne (1) situé du côté d'entraînement, comportant un arbre de transmission (1.1);
- un démarreur-générateur (2) situé du côté d'entraînement, en particulier sous forme de machine asynchrone, comportant un arbre de rotor (2.1) couplé à l'arbre de transmission (1.1) sans engagement frictionnel;
- une boîte de vitesses à main (3) située du côté sortie motrice, comportant un arbre d'entrée de boîte (3.1) couplé à l'arbre d'entraînement (1.1) et/ou à l'arbre de rotor (2.1);
- un engrenage planétaire monoétage (4) situé dans le train d'entraînement sans engagement frictionnel entre le moteur à combustion interne (1) ou le démarreur-générateur (2), d'une part, et la boîte de vitesses à main (3), d'autre part, l'arbre d'entraînement (1) pouvant être mis en accouplement rotatif avec la couronne (4.1), l'arbre de rotor (2.1) en accouplement rotatif avec la roue solaire (4.2) et l'arbre d'entrée de boîte (3.1) en accouplement rotatif avec le porte-pignons satellites (4.3) de l'engrenage planétaire (4);
- un dispositif de pontage (5) à commande numérique permettant d'accoupler, lorsque l'arbre d'entraînement (1.1), l'arbre de rotor (2.1) et l'arbre d'entrée de boîte (3.1) tournent synchroniquement, les pièces de transmission de l'engrenage planétaire (4) les unes aux autres pour former une unité de transmission rigide, et permettant le désaccouplement quand la boîte de vitesses à main (3) est actionnée ou lors du démarrage/mise en marche du véhicule;
**caractérisé par** un gestionnaire de couple (10) pour la commande simultanée du moteur à combustion interne (1) ainsi que du démarreur-générateur (2), afin de réaliser un couple zéro du côté d'entraînement ou une synchronisation par rapport à l'arbre d'entrée de boîte (3.1) et à la boîte de vitesses à main (3), l'embrayage de pontage (5) étant ouvert, au moyen d'une commande de couple ou de vitesse de rotation généralement en utilisant le moteur à combustion interne (1) pour les grandes vitesses de rotation et généralement en utilisant le démarreur-générateur (2) pour les petites vitesses de rotation.

2. Système d'entraînement selon la revendication 1, comportant
- un dispositif de course libre (6) situé dans le train d'entraînement entre le porte-pignons satellites (4.3) et l'arbre d'entrée de boîte (3.1);
- un blocage rotatif du porte-pignons satellites (4.3) pour bloquer sa rotation en contresens par rapport au sens de rotation opératoire, au cours de l'action de démarrage du moteur à combustion interne (1), une rotation dans le sens opératoire restant possible.

3. Système d'entraînement selon les revendications 1 et/ou 2, comportant
- un amortisseur de vibrations à torsion (9) situé dans le train d'entraînement entre l'arbre d'entraînement (1.1) du moteur à combustion interne et la couronne (4.1).

4. Système d'entraînement selon l'une des revendications 1 à 3, comportant les opérations suivantes pour démarrer le moteur à combustion interne :
- ouverture du dispositif de pontage (5);
- blocage rotatif du porte-pignons satellites (4.3) par le dispositif de course libre (6);
- mode opératoire moteur du démarreur-générateur (2) dont l'arbre de rotor (2.1) tourne contre le sens de rotation opératoire de l'arbre d'entraînement (1.1) du moteur à combustion interne (1), l'arbre d'entraînement (1.1) du moteur à combustion interne étant entraîné à travers la démultiplication de l'engrenage planétaire (4).

5. Système d'entraînement selon l'une des revendications 1 à 3, comportant les opérations suivantes pour la mise en marche du véhicule à moteur :
- ouverture du dispositif de pontage (5);
- engagement d'un rapport de vitesses au moyen de la boîte de vitesses à main (3);
- mode opératoire générateur du démarreur-générateur (2), l'arbre de rotor (2.1) tournant en sens inverse par rapport au sens de rotation opératoire de l'arbre d'entraînement (1.1), le couple générateur du démarreur-générateur (2) étant augmenté, en particulier au moyen d'une pédale de l'accélérateur (8), jusqu'à ce que le mode opératoire moteur est atteint, l'arbre de rotor (2.1) tournant alors dans le sens opératoire de l'arbre d'entraînement (1.1);
- fermeture du dispositif de pontage (5) quand il y a synchronisme entre la couronne (4.1) et le porte-pignons satellites (4.3).

6. Système d'entraînement selon l'une des revendications 1 à 3, comportant les opérations suivantes pour le passage en rapport supérieur de la boîte à main:
- ouverture du dispositif de pontage (5);
- diminution du couple du démarreur-générateur (2) et du moteur à combustion interne (1) vers un couple zéro sur l'arbre d'entrée de boîte (3.1);
- enlèvement du rapport de vitesses précédent inférieur;
- diminution du couple du démarreur-générateur (2) et/ou du moteur à combustion interne (1) en vue d'une synchronisation mécanique à la boîte de vitesses à main (3);
- engagement du rapport de vitesses plus haut de la boîte de vitesses à main (3) à la fin de la synchronisation mécanique;
- transmission d'un couple désiré au moteur à combustion interne (1) ou au démarreur-générateur (2);
- fermeture du dispositif de pontage (5) quand il y a synchronisme entre la couronne (4.1) et le porte-pignons satellites (4.3).

7. Système d'entraînement selon l'une des revendications 1 à 3, comportant les opérations suivantes pour le passage en rapport inférieur de la boîte à main :
- ouverture du dispositif de pontage (5);
- diminution du couple du démarreur-générateur (2) et du moteur à combustion interne (1) vers un couple zéro sur l'arbre d'entrée de boîte (3.1);
- enlèvement du rapport de vitesses précédent supérieur;
- augmentation du couple du démarreur-générateur (2) et du moteur à combustion interne (1) en vue d'une synchronisation mécanique à la boîte de vitesses à main (3);
- engagement du prochain rapport de vitesses plus bas de la boîte de vitesses à main (3) à la fin de la synchronisation mécanique;
- fermeture du dispositif de pontage (5) quand il y a synchronisme entre la couronne (4.1) et le porte-pignons satellites (4.3).

8. Système d'entraînement comportant une action de mise en marche ou de passage au rapport supérieur selon l'une au moins des revendications 5 à 7, comprenant
- l'alimentation d'un accumulateur d'énergie électrique, en particulier de la batterie du véhicule (7), par la puissance de freinage du démarreur-générateur (2).

9. Système d'entraînement comportant une action de mise en marche ou de passage au rapport supérieur selon l'une au moins des revendications 5 à 7, comprenant
- la consommation de la puissance de freinage du démarreur-générateur (2) par l'opération à perte du démarreur-générateur (2) lui-même, en particulier lorsque l'accumulateur d'énergie est pleinement chargé.
